# EUROPEAN PATENT SPECIFICATION

(11) **EP 3 998 135 B1**
(45) Date of publication and mention of the grant of the patent: **27.09.2023**
(21) Application number: 19943700.5
(22) Date of filing: 27.08.2019
(51) Int. Cl.: B23Q 3/155, B23Q 3/157

(54) **TOOL STORING DEVICE AND MACHINING TOOL**
WERKZEUGVERSTAUUNGSVORRICHTUNG UND BEARBEITUNGSWERKZEUG
DISPOSITIF DE STOCKAGE D'OUTIL ET OUTIL D'USINAGE

(43) Date of publication of application: 18.05.2022
(73) Proprietor: Yamazaki Mazak Corporation, Niwa-gun, Aichi 480-0197 (JP)
(72) Inventor: KINTOKI, Tomohiro, Niwa-gun, Aichi 480-0197 (JP); ONO, Seiya, Niwa-gun, Aichi 480-0197 (JP); MAEKAWA, Reiji, Niwa-gun, Aichi 480-0197 (JP); IEDA, Mitsumasa, Niwa-gun, Aichi 480-0197 (JP); KINOSHITA, Keijiro, Niwa-gun, Aichi 480-0197 (JP); YOSHIMOTO, Kenji, Niwa-gun, Aichi 480-0197 (JP); TANASE, Masaki, Niwa-gun, Aichi 480-0197 (JP)
(74) Representative: TBK
(86) International application number: PCT/JP2019/033511
(87) International publication number: WO 2021/038718

(56) References cited:
- EP-A2- 0 900 627
- WO-A1-2006/056726
- WO-A1-2018/192825
- DE-B4- 10 236 342
- JP-A- 2001 009 658
- JP-A- 2002 066 856
- JP-A- 2004 268 214

## Description

The present invention relates to a tool storage and a machine tool.

### Background Art

Such machine tools have been known that include a magazine for storing a plurality of tools.

As a related technique, JP 5 154 178 B2 discloses a multi-tasking lathe. In the multi-tasking lathe recited in JP 5 154 178 B2, a door is provided on the front surface of a cover for a tool magazine apparatus so that the tool magazine apparatus can be accessed through the door.

EP 0 900 627 A2 shows a known tool storage comprising: a tool receiver adapted to be provided at a position further in a first direction than a workpiece holder of a machine tool and configured to receive a tool from outside the machine tool; a tool magazine adapted to be provided at a position further in a second direction than the workpiece holder, the second direction being defined as a direction opposite to the first direction; and a tool carriage configured to carry the tool between the tool receiver and the tool magazine.

### Summary of Invention

It is the object of the present invention to provide a tool storage and a machine tool that enable a worker or a robot to easily store a tool in a tool magazine.

The object of the present invention is achieved by a tool storage having the features of claim 1 and a machine tool as defined in claim 13.

Further advantageous developments of the present invention are defined in the dependent claims.

It is an advantage of the present invention to provide a tool storage and a machine tool that enable a worker or a robot to easily store a tool in a tool magazine.

### Brief Description of Drawings

[FIG. 1] FIG. 1 is a schematic side view of a tool storage according to a first embodiment of the present invention.
[FIG. 2] FIG. 2 is a schematic side view of a machine tool according to the first embodiment.
[FIG. 3] FIG. 3 is a schematic plan view of the machine tool according to the first embodiment.
[FIG. 4] FIG. 4 is a schematic plan view of another example of the machine tool according to the first embodiment.
[FIG. 5] FIG. 5 is a schematic perspective view of a machine tool according to a second embodiment of the present invention.
[FIG. 6] FIG. 6 is a schematic perspective view of an example tool receiver.
[FIG. 7] FIG. 7 is a schematic perspective view of an enlarged part of the machine tool.
[FIG. 8] FIG. 8 is a schematic perspective view of an enlarged part of the machine tool.
[FIG. 9] FIG. 9 is a schematic perspective view of an example carrier.
[FIG. 10] FIG. 10 is a schematic perspective view of an example carrier.
[FIG. 11] FIG. 11 is a schematic side view of an example tool.
[FIG. 12] FIG. 12 is a schematic perspective view of an enlarged part of the machine tool.
[FIG. 13] FIG. 13 is a schematic perspective view of an enlarged part of the machine tool.
[FIG. 14] FIG. 14 is a schematic perspective view of an enlarged part of another example of the machine tool.
[FIG. 15] FIG. 15 is a schematic perspective view of an enlarged part of the machine tool.
[FIG. 16] FIG. 16 is a schematic perspective view of a machine tool according to a third embodiment of the present invention

### Description of Embodiments

By referring to the accompanying drawings, a tool storage 1 and a machine tool 100 according to some embodiments of the present invention will be described. It is noted that in the following description of the embodiments, identical reference numerals are used to denote identical portions, members, or components having identical functions, and redundant description of identical portions, members, or components will be eliminated or minimized.

### (Definitions of Terms)

A tool carried to a machining apparatus 30 from a tool receiver 10 or a tool magazine 20 will be referred to as "first the tool C1", and a tool carried to the tool receiver 10 or the tool magazine 20 from the machining apparatus 30 will be referred to as "second the tool C2". Also, a tool that can be stored in the magazines such as the tool magazine 20, a second tool magazine 20b, and an auxiliary magazine 70 or that can be attached to the machining apparatus 30 will be referred to as "tool C". The first tool C1 and the second tool C2 are encompassed within the term the "tool C" as used in the following description as well as the appended claims.

In this specification, a machine tool means any machine capable of machining a workpiece, which is a to-be-machined object. The machine tool may be a combined multi-functional machine tool (for example, a multi-tasking lathe), which is capable of performing a plurality of different kinds of machining. For example, the machine tool is a machine capable of cutting, machining, and/or grinding a metal.

### (First Embodiment)

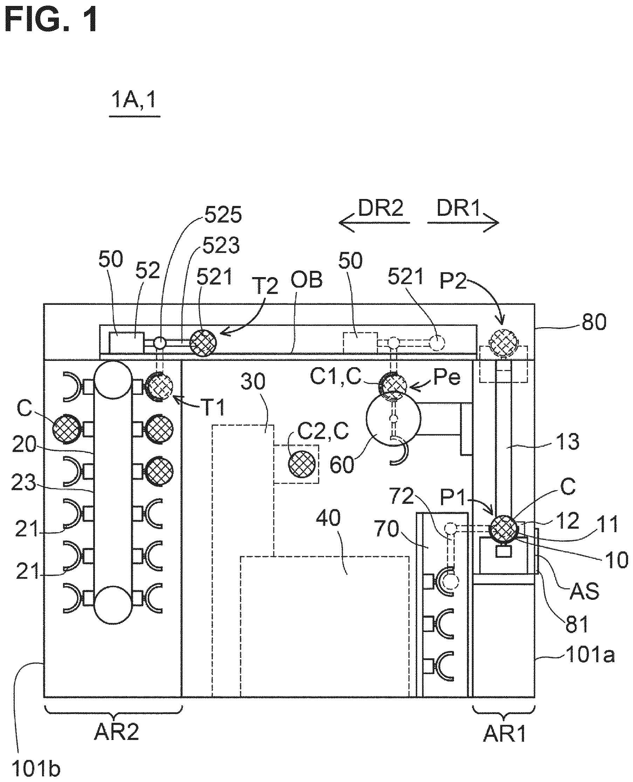

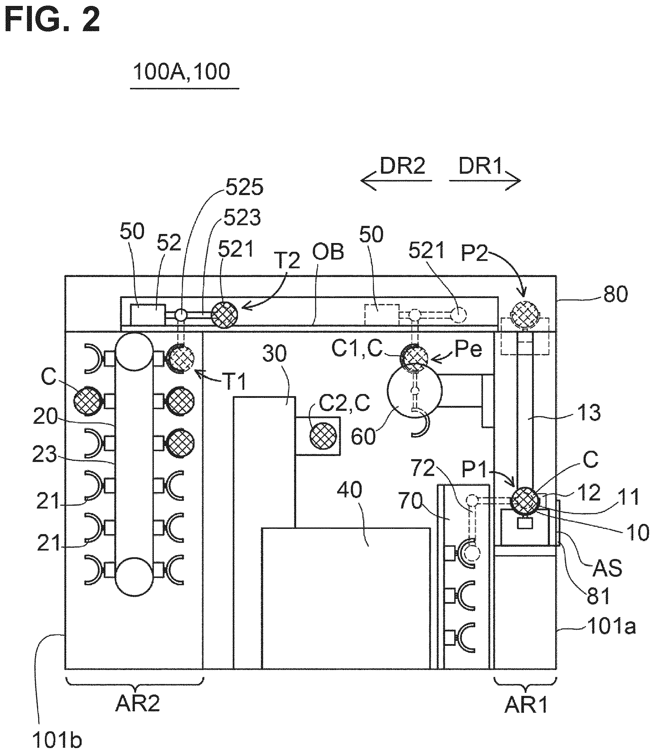

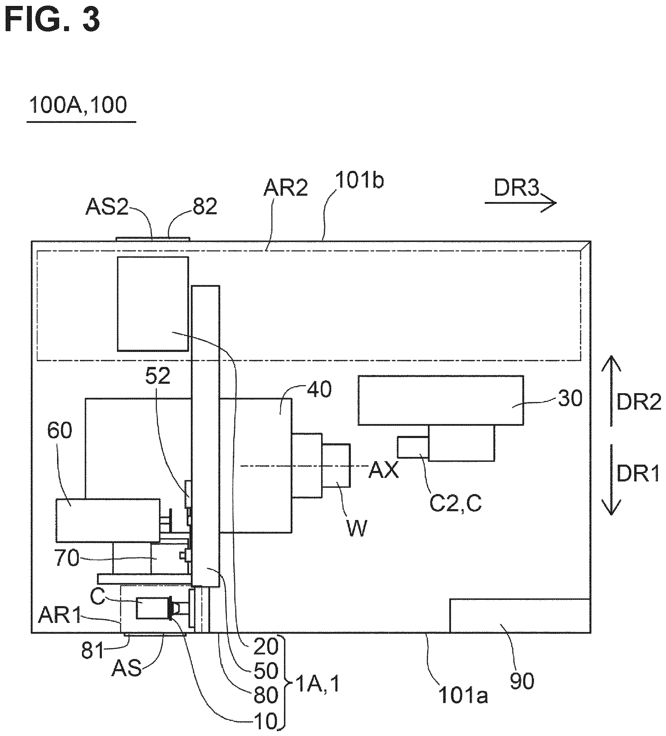

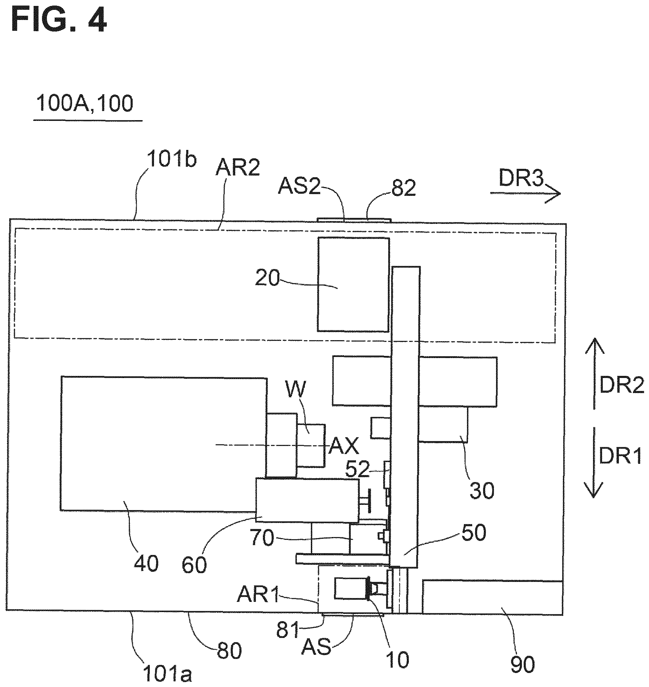

By referring to FIGs. 1 to 4, a tool storage 1A and a machine tool 100A according to the first embodiment will be described. FIG. 1 is a schematic side view of the tool storage 1A according to the first embodiment. FIG. 2 is a schematic side view of the machine tool 100A according to the first embodiment. FIG. 3 is a schematic plan view of the machine tool 100A according to the first embodiment. FIG. 4 is a schematic plan view of another example of the machine tool 100A according to the first embodiment.

In the example illustrated in FIG. 1, the tool storage 1A according to the first embodiment includes the tool receiver 10 (tool receiver), the tool magazine 20, a tool carriage 50, and a tool exchanger 60.

In the example illustrated in FIG. 2, the machine tool 100A according to the first embodiment includes, in addition to the tool storage 1A: the machining apparatus 30, which machines a workpiece; and a workpiece holder 40, which holds the workpiece.

The tool receiver 10 is a device capable of receiving the tool C from outside the machine tool 100A. A worker or a robot is able to provide the tool C to the tool receiver 10 from outside the machine tool 100A. Providing the tool C to the tool receiver 10 may be performed by placing the tool C on the tool receiver 10 or by attaching the tool C to a tool support member 11 of the tool receiver 10.

The tool magazine 20 is capable of storing therein the tool C. The tool magazine 20 includes a tool holder 21, which is capable of holding the tool C. In the example illustrated in FIG. 1, the tool magazine 20 includes a plurality of tool holders 21. The plurality of tool holders 21 are capable of holding a plurality of tools C. In other words, the tool magazine 20 is capable of storing a plurality of tools C via the plurality of tool holders 21.

In the example illustrated in FIG. 1, the tool magazine 20 includes an endless chain 23. On the endless chain 23, the plurality of tool holders 21 are mounted. The endless chain 23 is drivable into rotation by a driver to make a circulation movement of the plurality of tool holders 21.

The tool C can be attached to the machining apparatus 30, which constitutes a part of the machine tool 100A. The machining apparatus 30 is capable of moving the tool C toward a workpiece held by the workpiece holder 40. In this manner, the workpiece is machined (for example, cut, machined, or ground) by the tool C. The machining apparatus 30 is preferably capable of moving the tool C in a desired direction.

The workpiece holder 40, which constitutes a part of the machine tool 100A, is capable of holding a workpiece, which is a to-be-machined object. In the example illustrated in FIG. 3, the workpiece holder 40 may support a workpiece W rotatably about a rotation axis AX.

The tool carriage 50 is a device capable of carrying the tool C. The tool carriage 50 may be made up of a single carrier or a combination of a plurality of carriers.

In the example illustrated in FIG. 3, in plan view, the tool receiver 10 is provided at a position further in a first direction *DR1* than the workpiece holder 40. An example of the first direction *DR1* is a direction extending from the back surface, 101b, of the machine tool 100A (the back surface of the machine tool 100A) toward the front surface, 101a, of the machine tool.

Also in the example illustrated in FIG. 3, in plan view, the tool magazine 20 is provided at a position further in a second direction *DR2* than the workpiece holder 40. It is to be noted that the second direction *DR2* is a direction opposite to the first direction *DR1.* An example of the second direction *DR2* is a direction extending from the front surface 101a of the machine tool 100A toward the back surface 101b (the back surface of the machine tool 100A) of the machine tool.

In the example illustrated in FIG. 3, the tool carriage 50 is capable of carrying the tool C between: the tool receiver 10, which is provided at a position further in the first direction *DR1* than the workpiece holder 40; and the tool magazine 20, which is provided at a position further in the second direction *DR2* than the workpiece holder 40. The tool receiver 10 is provided in a first region AR1, and the tool magazine 20 is provided in a second region AR2, which is opposite to the first region AR1. The above configuration ensures that by providing the tool C to the tool receiver 10, the tool C can be stored in the second region AR2.

In the tool storage 1A (or the machine tool 100A) according to the first embodiment, the tool magazine 20 is provided at a position further in the second direction *DR2* than the workpiece holder 40. This configuration prevents the tool magazine 20 from protruding in the first direction *DR1* (for example, toward the front surface) of the machine tool 100A. The above configuration also eliminates the need for a design change on the machine tool 100A's first direction *DR1*-side shape (for example, the front surface shape) based on the size of the tool magazine 20. In other words, the machine tool 100A's first direction *DR1*-side shape (for example, the front surface shape) can be designed without restrictions associated with the size and/or the shape of the tool magazine 20. For example, it is easier to make the front surface-side shape of the machine tool 100A a flat shape. When the front surface-side shape of the machine tool 100A is a flat shape, automation units (such as a robot, an automatic carrier, and an auto parts catcher) can be arranged with a higher degree of freedom on a machining line on which a various kinds of machines are aligned.

However, in the configuration in which the tool magazine 20 is provided at a position further in the second direction *DR2* than the workpiece holder 40, a worker or a robot is unable to make access to the tool magazine 20 from the first direction *DR1*-side (for example, from the front surface side of the machine tool 100A). Under the circumstances, in order to store the tool C in the tool magazine 20 (or in order to take the tool C out of the tool magazine 20), it is necessary for a worker, for example, to move additionally. For example, it is necessary for a worker to move from the back surface side to the front surface side of the machine tool 100A.

In light of the considerations above, in the first embodiment, the tool receiver 10 is provided in a region on the first direction *DR1*-side, in order to improve accessibility of the tool magazine 20. In this case, a worker or a robot is able to more easily make access to the tool receiver 10 from the first direction *DR1*-side (for example, from the front surface side of the machine tool 100A).

Additionally, in the first embodiment, the tool carriage 50 is provided to carry the tool C between the region on the first direction *DR1*-side and the region on the second direction *DR2*-side. This ensures that the tool C at the tool receiver 10 can be stored in the tool magazine 20, which is provided in the region (on the second direction *DR2*-side) opposite to the region (on the first direction *DR1*-side) in which the tool receiver 10 is provided.

In this manner, pseudo-accessibility of the tool magazine 20 from the first direction *DR1*-side is ensured. In other words, a worker or a robot is able to make access to the tool magazine 20 from the first direction *DR1*-side via the tool receiver 10 and the tool carriage 50.

It is to be noted that in the first embodiment, the tool carriage 50 is preferably capable of carrying the tool C received by the tool receiver 10 to the tool magazine 20 directly (in other words, without intervention of the machining apparatus 30). In this case, the tool C supplied from outside the machine tool 100A can be stored in the tool magazine 20 without suspending the workpiece machining performed by the machining apparatus 30.

Thus, in the first embodiment, the tool magazine 20 can be provided in the region on the second direction *DR2*-side without undermining accessibility of the tool magazine 20 from the first direction *DR1*-side.

In the example illustrated in FIG. 3, the tool carriage 50 is provided such that the tool carriage 50 passes immediately over the workpiece holder 40. Also, in plan view, the tool receiver 10, the workpiece holder 40, and the tool magazine 20 are provided on a line. Alternatively, as in the example illustrated in FIG. 4, in plan view, the tool receiver 10, the workpiece holder 40, and the tool magazine 20 may not necessarily be provided on a line. In other words, in the first embodiment, the workpiece holder 40 may be provided at any convenient position in the lateral direction of the workpiece holder 40 (that is, in a third direction *DR3*, which is a direction perpendicular to the first direction *DR1* and the vertical direction).

In the above examples, description has been made with regard to a position of the tool receiver 10 relative to the workpiece holder 40 and a position of the tool magazine 20 relative to the workpiece holder 40. Next, description will be made with regard to positions of the tool receiver 10 and the tool magazine 20 relative to an access opening AS.

In the example illustrated in FIG. 3, the tool storage 1A (or the machine tool 100A) includes a housing 80. The housing 80 has the access opening AS, through which the inside of the machine tool 100A is accessible.

In the housing 80, elements such as the tool receiver 10, the tool magazine 20, the machining apparatus 30, the workpiece holder 40, and the tool carriage 50 are provided. In the housing 80, the tool exchanger 60 may be provided.

The tool receiver 10 is provided in the first region AR1, which is a region in the housing 80 and accessible through the access opening AS. In this case, a worker or a robot is able to provide, through the access opening AS, the tool C to the tool receiver 10, which is provided in the housing 80.

In the example illustrated in FIG. 3, the tool receiver 10 is unable to move to the outside of the housing 80. Alternatively, the tool receiver 10 may be able to move to the outside of the housing 80 through the access opening AS. In other words, the tool receiver 10 may move to the outside of the housing 80 and receive the tool C, and then the tool receiver 10 provided with the tool C may move into or make access to the inside of the housing 80 through the access opening AS.

The tool magazine 20 is provided in the second region AR2 of the inside of the housing 80. The second region AR2 is a region further away from the access opening AS than the first region AR1 is away from the access opening AS.

The second region AR2, in which the tool magazine 20 is provided, may be a region that is, in plan view, further away from the access opening AS than the rotation axis AX of the workpiece holder 40 is away from the access opening AS. Alternatively, the second region AR2, in which the tool magazine 20 is provided, may be a region that is, in plan view, further away from the access opening AS than the tool exchanger 60 is away from the access opening AS.

The tool carriage 50 is capable of carrying the tool C between: the tool receiver 10, which is provided in the first region AR1; and the tool magazine 20, which is provided in the second region AR2.

In the example illustrated in FIG. 3, a worker or a robot is able to provide the tool C to the tool receiver 10. The tool C provided at the tool receiver 10 is carried by the tool carriage 50 to the tool magazine 20, which is provided in the second region AR2 (the second region AR2 is further away from the access opening AS).

Thus, in the first embodiment, without undermining accessibility of the tool magazine 20, the tool magazine 20 is provided in the second region AR2, which is further away from the access opening AS.

Next, by referring to FIGs. 1 to 4, an optional configuration employable in the first embodiment will be described.

As illustrated in FIGs. 1 and 2, the tool storage 1A (or the machine tool 100A) includes the tool exchanger 60, which exchanges the first tool C1 and the second tool C2 with each other. The first tool C1 is carried to a tool exchange position Pe by the tool carriage 50. The second tool C2 is attachable to the machining apparatus 30.

In the examples illustrated in FIGs. 1 and 2, the tool storage 1A (or the machine tool 100A) includes the tool exchanger 60, and the tool carriage 50 is capable of carrying the first tool C1 received from the tool receiver 10 to the tool exchange position Pe. This configuration ensures that the first tool C1 provided at the tool receiver 10 by a worker or a robot is carried to the tool exchange position Pe by the tool carriage 50. The above configuration also ensures that the first tool C1 carried to the tool exchange position Pe is attached to the machining apparatus 30 by the tool exchanger 60.

In the examples illustrated in FIGs. 1 and 2, the tool carriage 50 is capable of carrying the first tool C1 received from the tool receiver 10 to the tool exchange position Pe directly (in other words, without intervention of the tool magazine 20). In this case, the first tool C1 supplied from outside the machine tool 100A can be quickly attached to the machining apparatus 30. The first tool C1 carried to the tool exchange position Pe may be a tool storable in the tool magazine 20 or may be a tool difficult to store in the tool magazine 20. In other words, a first tool C1 difficult to store in the tool magazine 20 can be carried to the tool exchange position Pe, and this first tool C1 can be attached to the machining apparatus 30.

As illustrated in FIG. 3, the tool storage 1A (or the machine tool 100A) may include a controller 90, which controls the tool carriage 50 and the tool exchanger 60.

By controlling the tool carriage 50, the controller 90 executes a first control mode, in which the tool C is carried from the tool receiver 10 to the tool magazine 20. In the first control mode, the tool C is stored in the tool magazine 20 without intervention of the machining apparatus 30. This ensures that the tool C is quickly stored in the tool magazine 20.

The controller 90 executes a second control mode, in which: the controller 90 controls the tool carriage 50 to carry the first tool C1 from the tool receiver 10 to the tool exchange position Pe; and controls the tool exchanger 60 to cause the first tool C1 provided at the tool exchange position Pe to be attached to the machining apparatus 30. In the second control mode, the first tool C1 is attached to the machining apparatus 30 without intervention of the tool magazine 20. This ensures that the first tool C1 is quickly attached to the machining apparatus 30.

The controller 90 is preferably capable of selectively executing the first control mode and the second control mode. In this case, the storing of the tool C at the tool receiver 10 in the tool magazine 20 and the attaching of the first tool C 1 at the tool receiver 10 to the machining apparatus 30 can be executed selectively.

As illustrated in FIGs. 1 and 2, the tool carriage 50 may include a carrier 52, which is movable along a trajectory OB. The carrier 52 may include: a holder 521, which is capable of holding the tool C; an arm 523, which supports the holder 521; and a first driver 525, which moves the arm 523 between a first proceeding position T1 and a first withdrawal position T2. The first proceeding position T1 corresponds to a position at which the tool C is transferable between the tool magazine 20 (or the tool exchanger 60) and the holder 521. The first withdrawal position T2 corresponds to a position other than the first proceeding position T1.

When the holder 521 is movable to the first proceeding position T1, the tool C can be smoothly transferable between the holder 521 and the tool magazine 20 (or the tool exchanger 60). When the holder 521 is movable to the first withdrawal position T2, the tool C is prevented from interfering with some other apparatus or device while the tool C is being carried by the tool carriage 50.

As illustrated in FIGs. 1 and 2, the tool receiver 10 may include: the tool support member 11, which supports the tool C; and a driver 12, which moves the tool support member 11 between a first position P1 and a second position P2. The first position P1 is a position at which the tool support member 11 is able to receive the tool C from outside the machine tool 100A. The second position P2 is a position at which the tool C is transferable from the tool support member 11 to the tool carriage 50. In the examples illustrated in FIGs. 1 and 2, the second position P2 is positioned above the first position P1. The tool receiver 10 may include a guide member 13, which guides the movement of the tool support member 11 (an example of the guide member 13 is a guide column extending in the vertical direction).

When the tool support member 11 is movable to the first position P1, a worker or a robot is able to easily make access to the tool support member 11 at the first position P1. When the tool support member 11 is movable to the second position P2, the tool carriage 50 is able to easily make access to the tool support member 11 at the second position P2. This eliminates or minimizes complication of the carrying passage defined by the tool carriage 50.

In the examples illustrated in FIGs. 1 and 2, the position at which the tool receiver 10 receives the tool C from outside the machine tool 100A is defined as the first position P1, and the carrying passage defined by the tool carriage 50 (for example, the trajectory OB) is positioned above the first position P1. In other words, in the examples illustrated in FIGs. 1 and 2, the tool carriage 50 is provided in an upper region of the machine tool 100A. In this case, the upper region of the machine tool 100A is effectively used, and as a result, the machine tool 100A becomes compact in size.

In the example illustrated in FIG. 3, the tool storage 1A (or the machine tool 100A) includes the housing 80, which has the access opening AS, through which the inside of the machine tool 100A is accessible. The tool receiver 10 is provided in a region accessible through the access opening AS. The housing 80 may be provided with a door 81, which makes the access opening AS openable and closable.

In the example illustrated in FIG. 3, the housing 80 has a second access opening AS2, through which the tool magazine 20 is directly accessible. The tool magazine 20 is provided in a region accessible through the second access opening AS2. For example, the second access opening AS2 is provided at a position further in the second direction *DR2* than the tool magazine 20. The housing 80 may be provided with a door 82, which makes the second access opening AS2 openable and closable.

When the tool storage 1A (or the machine tool 100A) has the access opening AS, a worker is able to perform the work of storing the tool C from the first direction *DR1*-side of the machine tool 100A. When the tool storage 1A (or the machine tool 100A) has the second access opening AS2, the worker is able to make direct access to the tool magazine 20 through the second access opening AS2. In this case, a plurality of tools C can be quickly stored in the tool magazine 20.

As illustrated in FIGs. 1 and 2, the tool storage 1A (or the machine tool 100A) may include: the auxiliary magazine 70, in which the tool C is storable; and a tool transferor 72. The tool transferor 72 transfers the tool C between the tool receiver 10 and the auxiliary magazine 70.

When the tool C is stored the auxiliary magazine 70, the tool C can be stored without intervention of the tool carriage 50. This ensures that the tool C provided at the tool receiver 10 can be quickly stored in the auxiliary magazine 70. The auxiliary magazine 70 is preferably capable of storing a plurality of tools C. The auxiliary magazine 70 may store a tool storable in the tool magazine 20 or may store a specialized tool difficult to store in the tool magazine 20.

In the example illustrated in FIG. 3, the auxiliary magazine 70 is provided in a region closer to the access opening AS than to the second region AR2, in which the tool magazine 20 is provided. Also in the example illustrated in FIG. 3, the auxiliary magazine 70 is provided at a position further in the first direction *DR1* than the workpiece holder 40.

### (Second Embodiment)

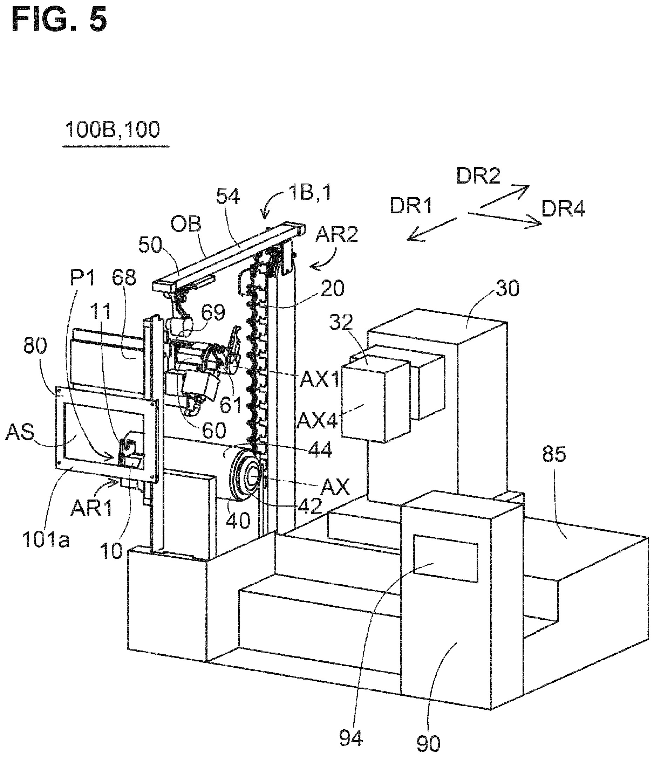

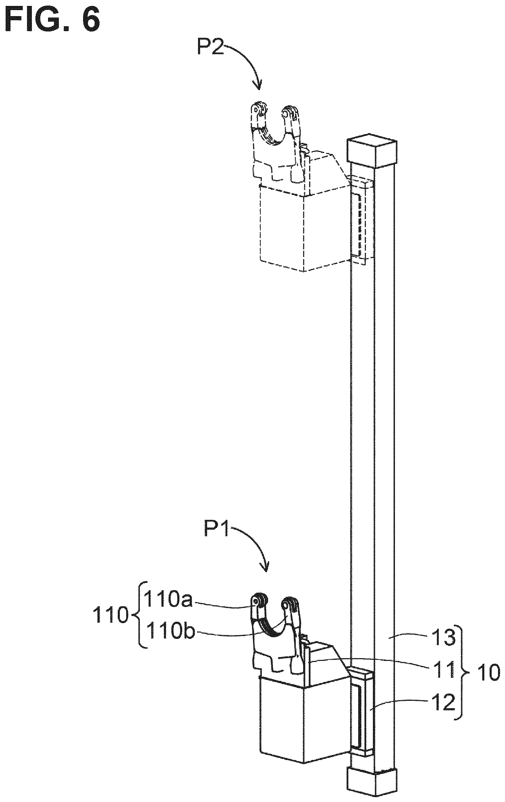

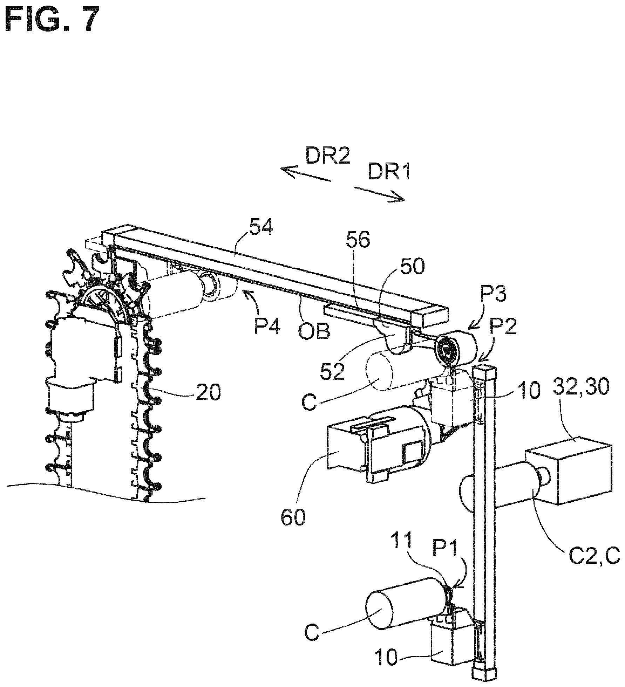

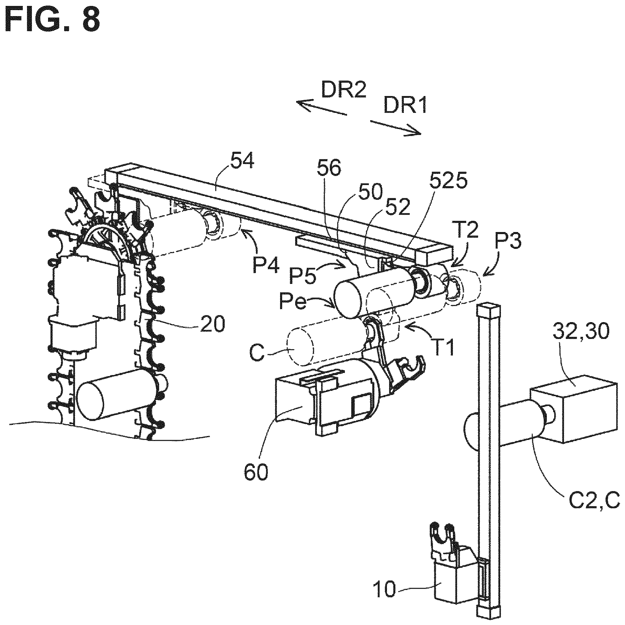

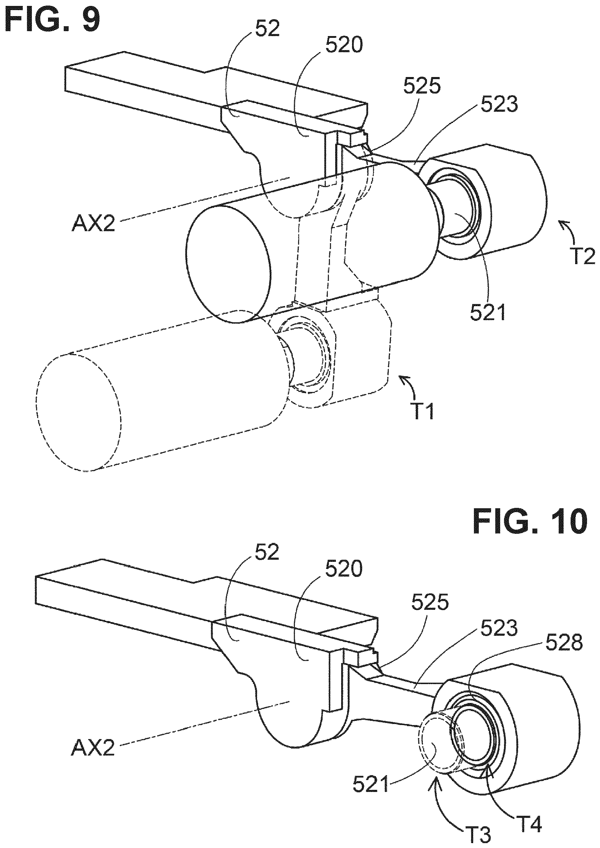

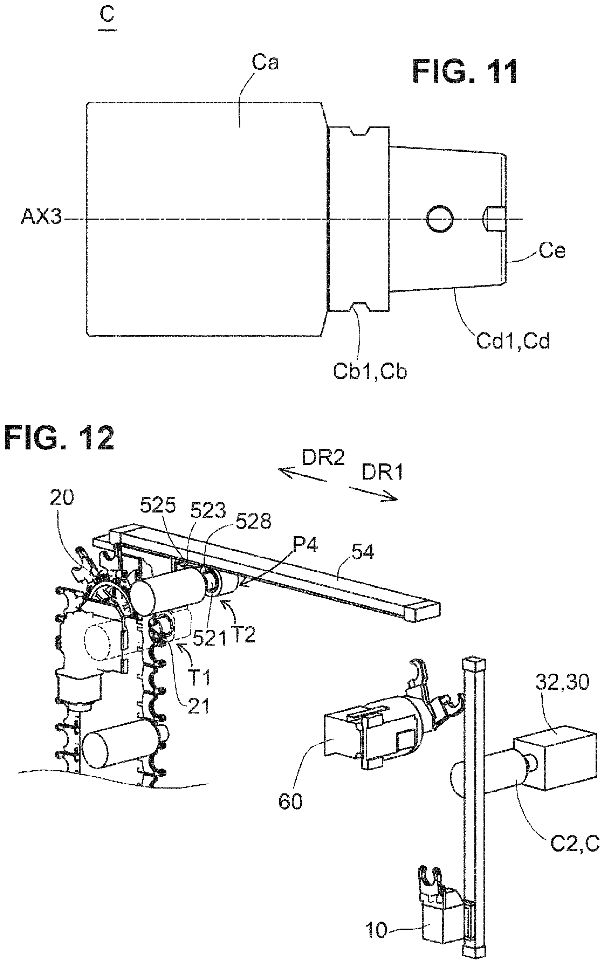

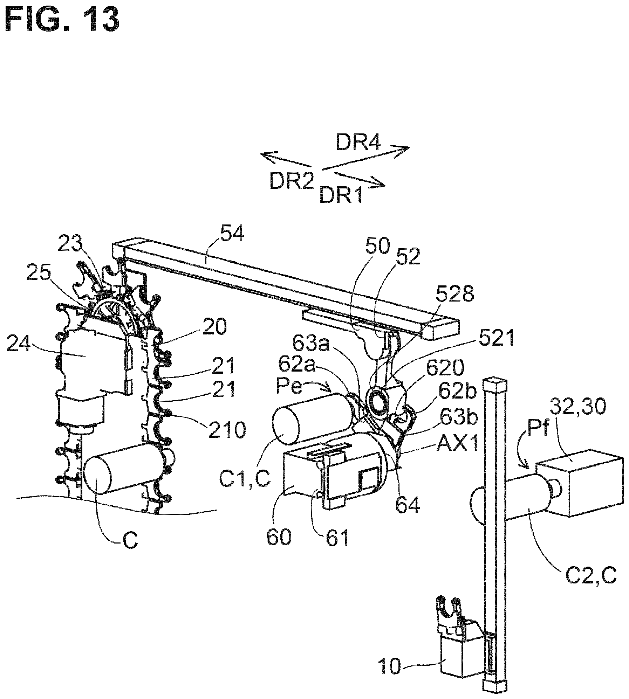

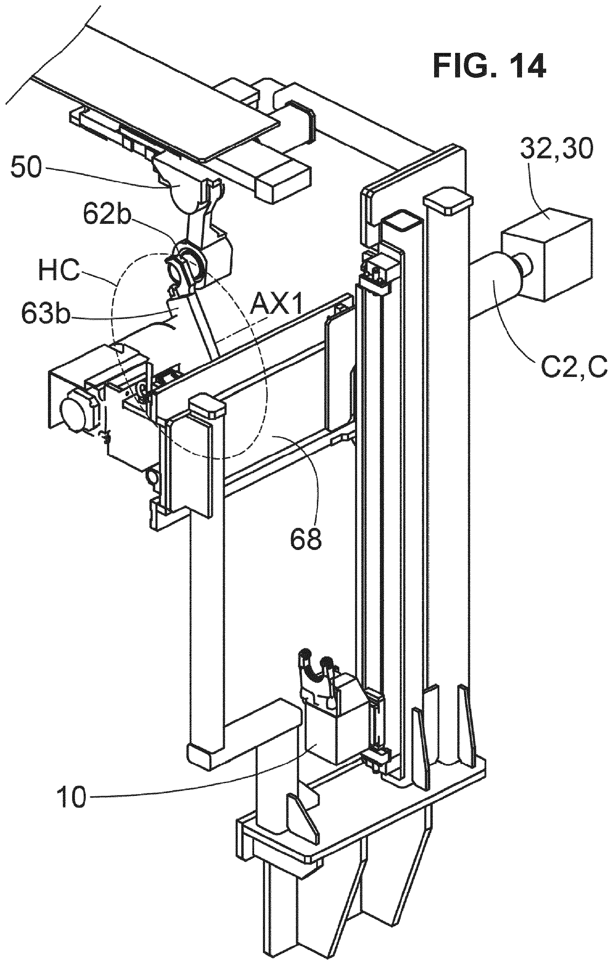

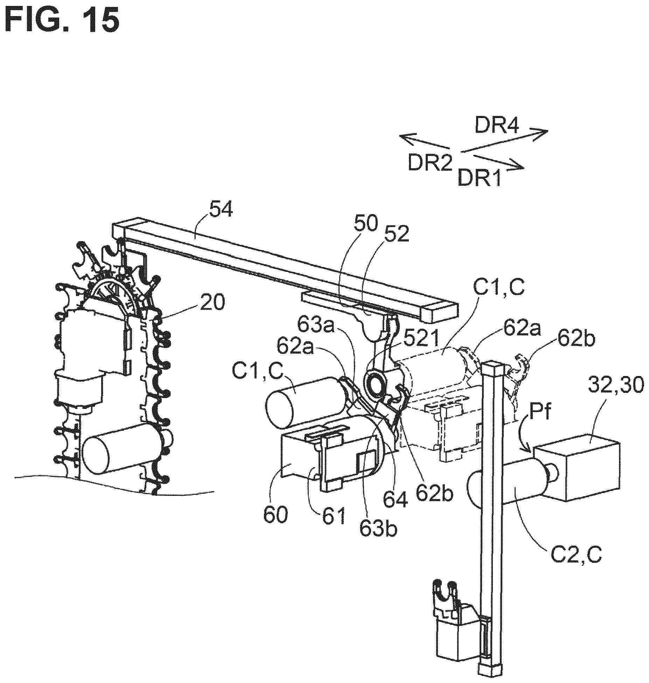

By referring to FIGs. 5 to 15, a tool storage 1B and a machine tool 100B according to the second embodiment will be described. FIG. 5 is a schematic perspective view of the machine tool 100B according to the second embodiment. FIG. 6 is a schematic perspective view of an example of the tool receiver 10. FIGs. 7 and 8 each are a schematic perspective view of an enlarged part of the machine tool 100B. FIGs. 9 and 10 each are a schematic perspective view of an example of the carrier 52. FIG. 11 is a schematic side view of an example the tool C. FIGs. 12 and 13 each are a schematic perspective view of an enlarged part of the machine tool 100B. FIG. 14 is a schematic perspective view of an enlarged part of another example of the machine tool 100B. FIG. 15 is a schematic perspective view of an enlarged part of the machine tool 100B. It is to be noted that in FIGs. 5, 7, 8, and FIGs. 12 to 15, some components of the tool storage 1B and the machine tool 100B (for example, the housing) are omitted.

The following description of the second embodiment will mainly focus on those respects in which this embodiment is different from the first embodiment. Also in the following description of the second embodiment, those respects that have already been described in the first embodiment will not be repeated. Thus, it will be readily appreciated that those respects that are not explicitly described in the second embodiment but are described in the first embodiment apply in the second embodiment.

In the example illustrated in FIG. 5, the tool storage 1B includes the tool receiver 10, the tool magazine 20, the tool carriage 50, and the tool exchanger 60. The tool storage 1B may include the controller 90, and/or the housing 80. In the example illustrated in FIG. 5, the machine tool 100B includes the machining apparatus 30 and the workpiece holder 40, in addition to the tool storage 1B.

The tool receiver 10, the tool magazine 20, the machining apparatus 30, the workpiece holder 40, the tool carriage 50, the tool exchanger 60, the controller 90, and the housing 80 are as outlined in the first embodiment. Redundant description of these elements will not be provided here.

In the example illustrated in FIG. 5, the tool receiver 10 is provided at a position further in the first direction *DR1* than the workpiece holder 40, and the tool magazine 20 is provided at a position further in the second direction *DR2* than the workpiece holder 40. Alternatively or additionally, the tool receiver 10 may be provided in the first region AR1, and the tool magazine 20 may be provided in the second region AR2, which is a region that is further away from the access opening AS than the first region AR1 is away from the access opening AS.

In the example illustrated in FIG. 5, the tool storage 1B (or the machine tool 100B) includes the tool carriage 50, which is capable of carrying the tool C between the tool receiver 10 and the tool magazine 20. With this configuration, the tool storage 1B (or the machine tool 100B) according to the second embodiment provides advantageous effects similar to the advantageous effects provided by the tool storage 1A (or the machine tool 100A) according to the first embodiment.

### (Tool receiver 10)

In the example illustrated in FIG. 6, the tool receiver 10 includes: the tool support member 11, which supports the tool C; and the driver 12, which moves the tool support member 11. The tool receiver 10 may include the guide member 13, which guides the movement of the tool support member 11.

The tool support member 11 includes grippers 110, which are capable of gripping a first portion Cb (see FIG. 11) of the tool C. The grippers 110 include a first gripper 110a and a second gripper 110b. The second gripper 110b is preferably biased toward the first gripper 110a. In this case, by pressing the first portion Cb of the tool C into the region between the first gripper 110a and the second gripper 110b, the tool C is automatically gripped by the grippers 110.

The driver 12 moves the tool support member 11 between the first position P1 and the second position P2. The first position P1 is a position at which the tool C is receivable by the tool support member 11 from outside the machine tool 100A. The second position P2 is a position at which the tool C is transferable from the tool support member 11 to the tool carriage 50. In the example illustrated in FIG. 6, the second position P2 is above the first position P1. The second position P2 may be a position perpendicularly above the first position P1.

As illustrated in FIG. 5, the tool support member 11 provided at the first position P1 is preferably visually recognizable through the access opening AS, which is provided on the housing 80 (the access opening AS is an opening allowing access to the inside of the machine tool 100B). For example, the access opening AS is provided on the front surface 101a of the machine tool 100A.

### (Tool carriage 50)

As illustrated in FIG. 7, the tool carriage 50 is capable of receiving the tool C from the tool receiver 10. Also, the tool carriage 50 is capable of carrying the tool C between the tool receiver 10 and the tool magazine 20. The tool storage 1B (or the machine tool 100B) includes the tool exchanger 60, wherein the tool carriage 50 capable of carrying the tool C between the tool receiver 10 and the tool exchanger 60. Also, the tool carriage 50 is capable of carrying the tool C between the tool magazine 20 and the tool exchanger 60.

The tool carriage 50 includes: the carrier 52, which is movable along the trajectory OB; a guide member 54, which defines the trajectory OB; and a carrier driver 56, which moves the carrier 52 along the guide member 54. In the example illustrated in FIG. 7, the guide member 54 extends along a horizontal direction, for example. The guide member 54 preferably extends in a direction from a first surface of the machine tool 100B toward a second surface of the machine tool 100B. The first surface of the machine tool 100B is the surface on which the access opening AS is provided (for example, the front surface of the machine tool 100B), and the second surface of the machine tool 100B is the surface facing the first surface of the machine tool 100B (for example, the back surface of the machine tool 100B).

The carrier 52 is movable between the third position P3 and the fourth position P4. The third position P3 is a position at which the tool C is receivable by the carrier 52 from the tool receiver 10. Also, the third position P3 is located near the second position P2. The fourth position P4 is a position at which the tool C is transferable from the carrier 52 to the tool magazine 20. The fourth position P4 is located near the tool magazine 20. Also, the fourth position P4 is further in the second direction *DR2* than the third position P3.

In the example illustrated in FIG. 8, the carrier 52 is preferably movable between the third position P3 (or the fourth position P4) and a fifth position P5. The fifth position P5 is a position corresponding to the tool exchange position Pe. In other words, by moving the carrier 52 to the fifth position P5, the tool C held by the carrier 52 can be moved to the tool exchange position Pe. The fifth position P5 is located between the third position P3 and the fourth position P4. The third position P3, the fourth position P4, and the fifth position P5 are preferably provided on a line.

In the example illustrated in FIG. 9, the carrier 52 includes a carrier body 520 and the holder 521, which is capable of holding the tool C. The holder 521 is movable relative to the carrier body 520.

In the example illustrated in FIG. 9, the carrier 52 includes: the arm 523, which supports the holder 521; and the first driver 525, which rotates the arm 523 about a pivot axis AX2. The extending direction of the pivot axis AX2 is, for example, a direction perpendicular to the extending direction of the trajectory OB of the carrier 52 (in other words, the guide member 54).

A first end portion of the arm 523 is connected to the carrier body 520, and a second end portion of the arm 523 is connected to the holder 521. By rotating the arm 523 about the pivot axis AX2, the first driver 525 moves the arm 523 (more specifically, the holder 521) between the first proceeding position T1 (see the broken lines illustrated in FIG. 9) and the first withdrawal position T2 (see the solid lines illustrated in FIG. 9). An example of the first proceeding position T1 is a position at which the angle defined between the longitudinal direction of the arm 523 and the trajectory OB of the carrier 52 is relatively large. An example of the first withdrawal position T2 is a position at which the angle defined between the longitudinal direction of the arm 523 and the trajectory OB of the carrier 52 is relatively small. The first withdrawal position T2 may be a position at which the longitudinal direction of the arm 523 and the trajectory OB of the carrier 52 are parallel to each other.

When the carrier 52 moves to the fifth position P5 and the arm 523 moves from the first withdrawal position T2 to the first proceeding position T1, the tool C held by the carrier 52 is moved to the tool exchange position Pe (see FIG. 8).

When the carrier 52 moves to the fourth position P4 and the arm 523 moves from the first withdrawal position T2 to the first proceeding position T1, the tool C held by the carrier 52 is transferred to the tool holder 21 of the tool magazine 20 (see the broken lines illustrated in FIG. 12).

In the example illustrated in FIG. 10, the carrier 52 includes a second driver 528, which moves the holder 521 between a second proceeding position T3 (see the broken lines illustrated in FIG. 10) and a second withdrawal position T4 (see the solid lines illustrated in FIG. 10). By moving the holder 521 from the second withdrawal position T4 to the second proceeding position T3, the second driver 528 causes the holder 521 to hold the tool C. Also, by moving the holder 521 from the second proceeding position T3 to the second withdrawal position T4, the second driver 528 causes the holder 521 to release the tool C. The direction from the second withdrawal position T4 toward the second proceeding position T3 is, for example, a direction perpendicular to the extending direction of the trajectory OB of the carrier (in other words, the guide member 54). Also, the direction from the second withdrawal position T4 toward the second proceeding position T3 is, for example, a direction parallel to the pivot axis AX2.

### (Tool C)

In the example illustrated in FIG. 11, the tool C has: a tool body Ca; the first portion Cb, which is externally holdable by the tool support member 11 of the tool receiver 10 or the tool holder 21 of the tool magazine 20; and a second portion Cd, which is holdable by the holder 521 of the carrier 52.

The first portion Cb has a ring-shaped groove Cb1. When the tool support member 11 (or the tool holder 21) and the ring-shaped groove Cb1 are engaged with each other, the tool C is held by the tool support member 11 (or the tool holder 21) such that the tool C is unmovable in a direction along the longitudinal axis, AX3, of the tool C.

The second portion Cd has a base end portion Cd1, which is holdable by the holder 521. The base end portion Cd1 has a tapered surface having an outer diameter that diminishes toward a base end surface Ce of the tool C.

In the example illustrated in FIG. 11, the tool C has: the first portion Cb, which is grippable by the tool receiver 10 (or the tool magazine 20); and the second portion Cd, which is holdable by the carrier 52. This ensures that the tool C can be smoothly transferred between the tool receiver 10 (or the tool magazine 20), which is capable of gripping the first portion Cb, and the carrier 52, which is capable of holding the second portion Cd, which is different from the first portion Cb.

### (Tool magazine 20)

The tool magazine 20 is capable of storing therein a plurality of tools C. In the example illustrated in FIG. 13, the tool magazine 20 includes a plurality of tool holders 21, the endless chain 23, and a driver 24, which drives the endless chain 23. In the example illustrated in FIG. 13, the driver 24 drives the endless chain 23 via a sprocket 25. With this configuration, the plurality of tool holders 21, which are mounted on the endless chain 23, make a circulation motion.

Each tool holder 21 includes a gripper 210, which is capable of gripping the first portion Cb of the tool C (more specifically, the ring-shaped groove Cb1). The gripper 210 is biased by a biasing member, and the tool holder 21 holds the tool C using the biasing force of the biasing member.

### (Tool exchanger 60)

In the example illustrated in FIG. 5, the tool exchanger 60 includes: an exchanger body 61; a support member 68, which supports the exchanger body 61 linearly movably; and a linear motion driver 69, which moves the exchanger body 61 relative to the support member 68. The linear motion driver 69 moves the exchanger body 61 in a direction along a fourth direction *DR4.* The fourth direction *DR4* is, for example, a direction perpendicular to the vertical direction. Also, the fourth direction *DR4* is, for example, a direction perpendicular to the extending direction of the trajectory OB of the carrier (in other words, the guide member 54).

In the example illustrated in FIG. 5, the tool exchanger 60 includes the linear motion driver 69, which moves the exchanger body 61 linearly in the direction along the fourth direction *DR4.* In this case, even if the position of the tool carriage 50 in the direction along the fourth direction *DR4* is different from the position of the machining apparatus 30 in the direction along the fourth direction *DR4,* the tool C (the first tool C1) held by the tool carriage 50 and the tool C (the second tool C2) held by the machining apparatus 30 can be exchanged with each other.

In the example illustrated in FIG. 13, the tool exchanger 60 (more specifically, the exchanger body 61) includes: a first arm 63a, which includes a first gripper 62a; a second arm 63b, which includes a second gripper 62b; and a swing motion driver 64, which causes the first arm 63a and the second arm 63b to swing about a first axis AX1. The extending direction of the first axis AX1 is a direction parallel to the fourth direction *DR4.*

In the example illustrated in FIG. 13, the tool exchanger 60 includes the swing motion driver 64, which causes the first arm 63a and the second arm 63b to swing. In this case, by causing the first arm 63a and the second arm 63b to swing, the first gripper 62a or the second gripper 62b is moved to the tool exchange position Pe. Also, by causing the first arm 63a and the second arm 63b to swing after moving the exchanger body 61 in the fourth direction *DR4,* the first gripper 62a or the second gripper 62b is moved to a second tool exchange position Pf. The second tool exchange position Pf is a position at which the tool C is transferable from the tool exchanger 60 to the machining apparatus 30.

In the example illustrated in FIG. 13, the first arm 63a and the second arm 63b are arranged in a V shape. In this case, when the first tool C1 held by the tool carriage 50 and the second tool C2 held by the machining apparatus 30 are exchanged with each other, the swing motion displacement of each of the first arm 63a and the second arm 63b is minimized. By minimizing the swing motion displacement of each of the first arm 63a and the second arm 63b, the time spent in exchanging the first tool C1 and the second tool C2 with each other is shortened.

The first arm 63a and the second arm 63b may be made up of a single integrated component. Alternatively, the first arm 63a and the second arm 63b may be an assembly of a plurality of components.

Each of the first gripper 62a and the second gripper 62b is capable of gripping the first portion Cb of the tool C (more specifically, the ring-shaped groove Cb1 (see FIG. 11)). Each of the first gripper 62a and the second gripper 62b preferably includes a lock member 620, which prevents unexpected removal of the tool C. The lock member 620 is movable between a lock position and a lock release position. The movement of the lock member 620 is implemented by, for example, a driver such as an air actuator.

In the example illustrated in FIG. 13, the tool receiving opening of the first gripper 62a and the tool receiving opening of the second gripper 62b are open in the same direction as seen in the swing direction of the first arm 63a and the second arm 63b. In this case, by rotating the first arm 63a about the first axis AX1 in a first rotation direction, the first gripper 62a is able to receive the tool C provided at the tool exchange position Pe or the second tool exchange position Pf. Also, by rotating the second arm 63b about the first axis AX1 in the first rotation direction, the second gripper 62b is able to receive the tool C provided at the tool exchange position Pe or the second tool exchange position Pf. Alternatively, the tool receiving opening of the first gripper 62a and the tool receiving opening of the second gripper 62b may be open in opposite directions as seen in the swing direction of the first arm 63a and the second arm 63b. In this case, the rotation direction of the first arm 63a at the time when the first gripper 62a receives the tool C is a direction opposite to the rotation direction of the second arm 63b at the time when the second gripper 62b receives the tool C.

In the example illustrated in FIG. 14, when the first arm 63a or the second arm 63b makes an imaginary 360-degree rotation about the first axis AX1, an imaginary circle HC is drawn. A different member (for example, a support member 68, which supports the exchanger body 61) different from a member that rotates about the first axis AX1 together with the first arm 63a is provided at a position where the different member interferes with the imaginary circle HC. Thus, a different member different from the first arm 63a and a member (for example, the second arm 63b) that rotates about the first axis AX1 integrally with the first arm 63a is purposefully provided at a position where the different member interferes with the imaginary circle HC. This configuration makes the tool exchanger 60 or the machine tool 100B compact in size.

It will be assumed that the angle defined between the first arm 63a and the second arm 63b is 180 degrees. In this case, if the first arm 63a and the second arm 63b rotate by 180 degrees, the region covered by the first arm 63a and the region covered by the second arm 63b form a circle. It will be assumed that the angle defined between the first arm 63a and the second arm 63b is less than 180 degrees (in other words, a case where the first arm 63a and the second arm 63b are arranged in a V shape). In this case, if the first arm 63a and the second arm 63b rotate by 180 degrees, a complete circle is not formed by the region covered by the first arm 63a and the region covered by the second arm 63b. Therefore, the configuration in which the first arm 63a and the second arm 63b are arranged in a V shape provides a greater degree of freedom on the design that a different member different from the member that rotates about the first axis AX1 is provided at a position where the different member interferes with the imaginary circle HC, as compared with the case where the angle defined between the first arm 63a and the second arm 63b is 180 degrees.

From the viewpoint of shortening the time spent in exchanging the first tool C1 and the second tool C2 with each other; or from the viewpoint of realizing the configuration in which a different member different from the member that rotates about the first axis AX1 is provided at a position where the different member interferes with the imaginary circle HC, the angle defined between the first arm 63a and the second arm 63b is preferably less than 180 degrees, less than 120 degrees, or less than 90 degrees.

In the example illustrated in FIG. 13, the tool carriage 50 is capable of transferring the tool C to each of the tool receiver 10, the tool magazine 20, and the tool exchanger 60. Also, the tool carriage 50 is capable of receiving the tool from each of the tool receiver 10, the tool magazine 20, and the tool exchanger 60. The configuration in which the tool carriage 50 is capable of transferring the tool C to each of at least three apparatuses and/or devices (the tool receiver 10, the tool magazine 20, and the tool exchanger 60) increases the degree of freedom in the operation of the machine tool 100B while eliminating or minimizing an increase in the number of tool carriages. For example, in the example illustrated in FIG. 13, the tool carriage 50 is capable of (1) carrying the tool C from the tool receiver 10 to the tool magazine 20, (2) carrying the tool C from the tool receiver 10 to the tool exchanger 60, (3) carrying the tool C from the tool magazine 20 to the tool receiver 10, (4) carrying the tool C from the tool magazine 20 to the tool exchanger 60, (5) carrying the tool from the tool exchanger 60 to the tool receiver 10, and (6) carrying the tool C from the tool exchanger 60 to the tool magazine 20.

Also in the example illustrated in FIG. 13, each of the tool receiver 10, the tool magazine 20, and the tool exchanger 60 is capable of gripping the first portion Cb of the tool C (more specifically, the ring-shaped groove Cb1 of the tool C). Also, the tool carriage 50 (more specifically, the carrier 52) is capable of holding the second portion Cd of the tool C, which is different from the first portion Cb (more specifically, the tapered base end portion Cd1 of the tool C). With this configuration in the example illustrated in FIG. 13, the tool C can be smoothly transferred between the tool carriage 50 and each of the tool receiver 10, the tool magazine 20, and the tool exchanger 60.

### (Machining apparatus 30)

In the example illustrated in FIG. 5, the machining apparatus 30 is supported by a base 85 movably relative to the base 85. The machining apparatus 30 includes a tool holding member 32 (for example, a tool headstock), which holds the tool. The tool holding member 32 is preferably movable in a direction parallel to the first axis AX1 (in other words, in a direction parallel to the fourth direction *DR4*). In this case, the tool holding member 32 (and the tool C held by the tool holding member 32) is movable closer to the tool exchanger 60. Also, the tool holding member 32 is preferably movable in a direction parallel to the first direction *DR1*, and is preferably movable in the vertical direction.

Also, the tool holding member 32 is preferably rotatable about to an axis AX4, which is perpendicular to the first axis AX1 (more specifically, an axis parallel to the first direction *DR1*). In this case, by rotating the tool holding member 32 about the axis AX4, the center axis of the tool C held by the tool holding member 32 and the first axis AX1 of the tool exchanger 60 can be made parallel to each other.

### (Workpiece holder 40)

In the example illustrated in FIG. 5, the workpiece holder 40 includes: a chuck 42 (for example, workpiece spindle), which holds a workpiece; and a support member 44 (for example, workpiece headstock), which supports the chuck 42 rotatably about the rotation axis AX. An example of the rotation axis AX is an axis perpendicular to the first direction *DR1.* A more specific example is an axis parallel to the first axis AX1 of the tool exchanger 60.

### (Controller 90)

In the example illustrated in FIG. 5, the tool storage 1B (or the machine tool 100B) includes the tool magazine 20 and the controller 90, which controls the tool carriage 50. The controller 90 is preferably capable of controlling the tool receiver 10 and/or the machining apparatus 30. Also, the controller 90 is preferably capable of controlling the tool exchanger 60.

### (First control mode)

The controller 90 is capable of executing the first control mode by controlling the tool carriage 50 to carry the tool C from the tool receiver 10 to the tool magazine 20. The first control mode is a control mode for storing the tool C at the tool receiver 10 in the tool magazine 20.

The first control mode may include moving the tool support member 11, which is supporting the tool C, from the first position P1 to the second position P2 (see FIG. 7). This operation is executed by the controller 90 controlling the driver 12 of the tool receiver 10.

The first control mode may include moving, from the third position P3 to the fourth position P4, the carrier 52 that has received the tool C from the tool support member 11 (see FIG. 7). This operation is executed by the controller 90 controlling the carrier driver 56 of the tool carriage 50.

The first control mode may include moving the holder 521 of the carrier 52 from the first withdrawal position T2 to the first proceeding position T1 (see FIG. 12). This operation is executed by the controller 90 controlling the first driver 525 of the tool carriage 50. By moving the holder 521 to the first proceeding position T1, the tool magazine 20 (more specifically, the tool holder 21) is able to receive the tool C from the holder 521.

The first control mode may include moving the holder 521 of the carrier 52 from the second proceeding position T3 to the second withdrawal position T4. This operation is executed by the controller 90 controlling the second driver 528 of the tool carriage 50 (see FIG. 10). By moving the holder 521 to the second withdrawal position T4, the holder 521 is able to release the tool C. Thus, the tool C is transferred from the holder 521 of the carrier 52 to the tool holder 21 of the tool magazine 20.

### (Second control mode)

The controller 90 is capable of executing the second control mode by: controlling the tool carriage 50 to carry the tool C (the first tool C1) from the tool receiver 10 to the tool exchange position Pe; and controlling the tool exchanger 60 to attach, to the machining apparatus 30, the tool C (the first tool C1) provided at the tool exchange position Pe. The second control mode is a control mode for attaching, to the machining apparatus 30, the tool C (the first tool C1) provided at the tool receiver 10.

The second control mode may include moving the tool support member 11, which is supporting the tool C (the first tool C1), from the first position P1 to the second position P2 (see FIG. 7). This operation is executed by the controller 90 controlling the driver 12 of the tool receiver 10.

The second control mode may include moving, from the third position P3 to the fifth position P5, the carrier 52 that has received the tool C (the first tool C1) from the tool support member 11. This operation is executed by the controller 90 controlling the carrier driver 56 of the tool carriage 50 (see FIG. 8).

The second control mode may include moving the holder 521 of the carrier 52 (the carrier 52 provided at the fifth position P5) from the first withdrawal position T2 to the first proceeding position T1 (see FIG. 8). This operation is executed by the controller 90 controlling the first driver 525 of the tool carriage 50. By moving the holder 521 to the first proceeding position T1, the tool C (the first tool C1) held by the holder 521 is moved to the tool exchange position Pe.

The second control mode may include moving the first gripper 62a or the second gripper 62b of the tool exchanger 60 to the tool exchange position Pe (see FIG. 13). This operation is executed by the controller 90 controlling the swing motion driver 64 of the tool exchanger 60. By moving the first gripper 62a or the second gripper 62b to the tool exchange position Pe, the first gripper 62a or the second gripper 62b is able to receive the tool C (the first tool C1) from the holder 521.

The second control mode may include moving the holder 521 of the carrier 52 from the second proceeding position T3 to the second withdrawal position T4 (see FIG. 10). This operation is executed by the controller 90 controlling the second driver 528 of the tool carriage 50. By moving the holder 521 to the second withdrawal position T4, the holder 521 is able to release the tool C (the first tool C1). Thus, the tool C (the first tool C1) is transferred from the holder 521 of the carrier 52 to the tool exchanger 60.

The second control mode may include causing the first gripper 62a or the second gripper 62b that has received the tool C (the first tool C1) to make a swing motion from the angle position corresponding to the tool exchange position Pe to another angle position (compare FIG. 13 and FIG. 15 with each other). This operation is executed by the controller 90 controlling the swing motion driver 64 of the tool exchanger 60. Also, the second control mode may include moving the exchanger body 61 of the tool exchanger 60 in a direction approaching the machining apparatus 30 (more specifically, in the fourth direction *DR4)* (see FIG. 15). This operation is executed by the controller 90 controlling the linear motion driver 69 of the tool exchanger 60.

In the examples illustrated in FIGs. 13 and 15, the first gripper 62a or the second gripper 62b makes a swing motion over a small swing distance from the angle position corresponding to the tool exchange position Pe to another angle position. In the example illustrated in FIG. 15, when the exchanger body 61 moves in the fourth direction *DR4,* the first arm 63a passes through the space on the left side of the holder 521, and the second arm 63b passes through the space on the right side of the holder 521.

The second control mode may include moving the first gripper 62a or the second gripper 62b of the tool exchanger 60 to the second tool exchange position Pf. This operation is executed by the controller 90 controlling the swing motion driver 64 of the tool exchanger 60. Thus, the tool C (the first tool C1) gripped by the first gripper 62a or the second gripper 62b is attached to the machining apparatus 30. It is to be noted that in the example illustrated in FIG. 15, the tool (the second tool C2) is attached to the machining apparatus 30. In this case, the second tool C2 held by the machining apparatus 30 is retrieved by the second gripper 62b before the first tool C1 gripped by the first gripper 62a is attached to the machining apparatus 30.

### (Third control mode)

The controller 90 is capable of executing a third control mode by: controlling the tool carriage 50 to carry the tool C (the first tool C1) from the tool magazine 20 to the tool exchange position Pe; and controlling the tool exchanger 60 to attach, to the machining apparatus 30, the tool C (the first tool C1) provided at the tool exchange position Pe. The third control mode is a control mode for attaching, to the machining apparatus 30, the tool C (the first tool C1) stored in the tool magazine 20.

The third control mode may include moving the holder 521 of the carrier 52 from the first withdrawal position T2 to the first proceeding position T1. This operation is executed by the controller 90 controlling the first driver 525 of the tool carriage 50. By moving the holder 521 to the first proceeding position T1, the holder 521 is able to receive the tool C (the first tool C1) held by the tool magazine 20 (more specifically, the tool holder 21). Also, the third control mode may include moving the holder 521 of the carrier 52 from the first proceeding position T1 to the first withdrawal position T2. This operation is executed by the controller 90 controlling the first driver 525 of the tool carriage 50. By moving the holder 521 to the first withdrawal position T2, the tool C (the first tool C1) held by the holder 521 is lifted up to the withdrawal position.

The third control mode may include moving, from the fourth position P4 to the fifth position P5, the carrier 52 that has received the tool C (the first tool C1) from the tool magazine 20 (see FIG. 8). This operation is executed by the controller 90 controlling the carrier driver 56 of the tool carriage 50.

The third control mode may include moving the holder 521 of the carrier 52 (the carrier 52 provided at the fifth position P5) from the first withdrawal position T2 to the first proceeding position T1 (see FIG. 8). This operation is executed by the controller 90 controlling the first driver 525 of the tool carriage 50. By moving the holder 521 to the first proceeding position T1, the tool C (the first tool C1) held by the holder 521 is moved to the tool exchange position Pe. There is no difference between the third control mode and the second control mode in the operations made after the holder 521 has moved to the tool exchange position Pe. In light of this fact, redundant description of the operations made after the holder 521 has moved to the tool exchange position Pe will be omitted.

In the second embodiment, the controller 90 is preferably capable of selectively executing a plurality of control modes, namely, the first control mode, the second control mode, and the third control mode. A control mode may be selected using an input device 94, such as a touch panel (see FIG. 5). In other words, the machine tool 100B may include the input device 94, through which to specify the control mode to execute, from among the plurality of control modes, namely, the first control mode, the second control mode, and the third control mode.

### (Third Embodiment)

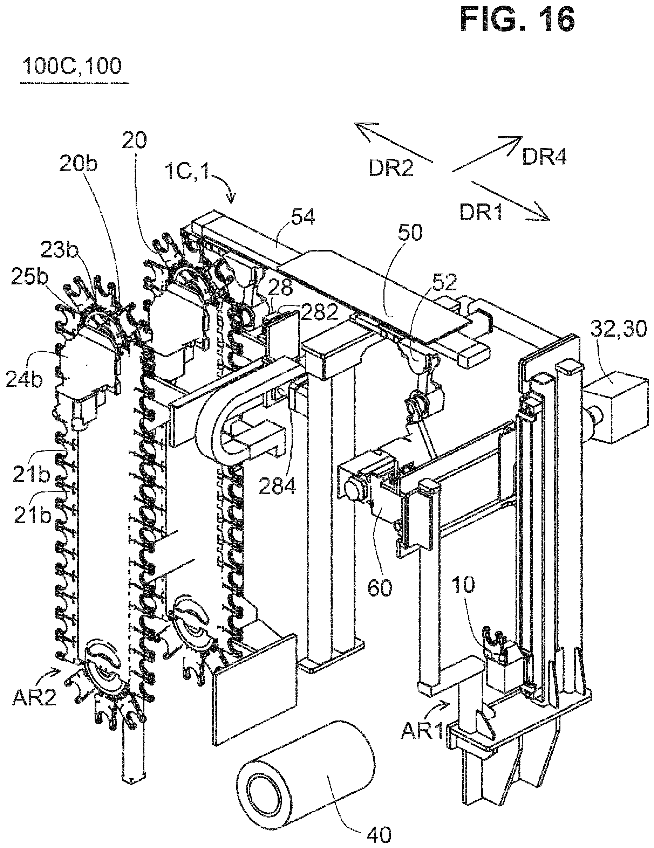

By referring to FIG. 16, a tool storage 1C and a machine tool 100C according to the third embodiment will be described. FIG. 16 is a schematic perspective view of the machine tool 100C according to the third embodiment. It is to be noted that in FIG. 16, some components of the machine tool 100C (for example, the housing) are omitted.

The tool storage 1C (or the machine tool 100C) according to the third embodiment is different from the tool storage 1A (or the machine tool 100A) according to the first embodiment and from the tool storage 1B (or the machine tool 100B) according to the second embodiment in that the tool storage 1C (or the machine tool 100C) includes a second tool magazine 20b and a second tool carriage 28. In other respects, the tool storage 1C (or the machine tool 100C) according to the third embodiment is similar to the tool storage 1A (or the machine tool 100A) according to the first embodiment or to the tool storage 1B (or the machine tool 100B) according to the second embodiment.

The following description of the third embodiment will mainly focus on the second tool magazine 20b and the second tool carriage 28, and will omit those respects that have already been described in the first embodiment or the second embodiment. Thus, it will be readily appreciated that those respects that are not explicitly described in the third embodiment but are described in the first embodiment or the second embodiment apply in the third embodiment.

In the example illustrated in FIG. 16, the tool storage 1C (or the machine tool 100C) includes a second tool magazine 20b, in addition to the tool magazine 20. The tool storage 1C (or the machine tool 100C) may include a third tool magazine.

In the example illustrated in FIG. 16, the second tool magazine 20b is provided at a position further in the second direction *DR2* than the workpiece holder 40. Alternatively or additionally, the second tool magazine 20b may be provided in the second region AR2 in the housing. The second tool magazine 20b is an apparatus capable of storing a plurality of tools C. In the example illustrated in FIG. 16, the second tool magazine 20b includes a plurality of tool holders 21b, an endless chain 23b, and a driver 24b, which drives the endless chain 23b. In the example illustrated in FIG. 16, the driver 24b drives the endless chain 23b via a sprocket 25b. With this configuration, the plurality of tool holders 21b, which are mounted on the endless chain 23b, make a circulation motion.

In the example illustrated in FIG. 16, the tool magazine 20 and the second tool magazine 20b are provided along a direction perpendicular to the carrying passage (in other words, the guide member 54) defined by the tool carriage 50. More specifically, the tool magazine 20 and the second tool magazine 20b are provided along the back surface of the machine tool 100C. The distance between the second tool magazine 20b and the tool carriage 50 is larger than the distance between the tool magazine 20 and the tool carriage 50. In this case, it is difficult for the carrier 52 of the tool carriage 50 to transfer the tool C directly to the second tool magazine 20b.

Under the circumstances, in the example illustrated in FIG. 16, the tool storage 1C (or the machine tool 100C) includes the second tool carriage 28, which is capable of carrying the tool C between the tool magazine 20 and the second tool magazine 20b.

The second tool carriage 28 includes: a second carrier 282, which is capable of holding the tool C (more specifically, a second portion Cd of the tool C or the tapered base end portion Cd1 of the tool C); and a second carrier driver 284, which moves the second carrier 282.

The second carrier 282 is preferably movable in a direction parallel to a direction from the tool magazine 20 toward the second tool magazine 20b (for example, movable in a direction parallel to the fourth direction *DR4).* In other words, the second carrier driver 284 is preferably capable of moving the second carrier 282 in a direction parallel to the direction from the tool magazine 20 toward the second tool magazine 20b (for example, moving the second carrier 282 in the direction parallel to the fourth direction *DR4).*

Also, the second carrier 282 is preferably movable in a direction parallel to the carrying passage defined by the tool carriage 50 (for example, movable in a direction parallel to the first direction *DR1*). In other words, the second carrier driver 284 is preferably capable of moving the second carrier 282 in the direction parallel to the carrying passage defined by the tool carriage 50 (for example, moving the second carrier 282 in the direction parallel to the first direction *DR1*).

The tool storage 1C (or the machine tool 100C) according to the third embodiment provides advantageous effects similar to the advantageous effects provided by the tool storage 1A (or the machine tool 100A) according to the first embodiment and/or the tool storage 1B (or the machine tool 100B) according to the second embodiment. Additionally, the tool storage 1C (or the machine tool 100C) according to the third embodiment includes a plurality of tools magazines (20 and 20b). This increases the capacity of the tool storage 1C (or the machine tool 100C) for storing tools C. Further, the front surface-side shapes of, for example, the machine tool 100A according to the first embodiment, the machine tool 100B according to the second embodiment, and the machine tool 100C according to the third embodiment can be made the same, flat shapes. This ensures that automation units (such as a robot, an automatic carrier, and an auto parts catcher) can be arranged with a higher degree of freedom on a machining line on which machines having different tool capacities are arranged.

Also, the tool storage 1C (or the machine tool 100C) according to the third embodiment includes the second tool carriage 28, which is capable of carrying the tool C between the tool magazine 20 and the second tool magazine 20b. In this case, the tool C can be smoothly transferred between a plurality of tools magazines.

In the example illustrated in FIG. 16, the tool magazine 20 and the second tool magazine 20b are provided along a direction perpendicular to the carrying passage defined by the tool carriage 50. Alternatively, the tool magazine 20 and the second tool magazine 20b may be provided along a direction parallel to the carrying passage defined by the tool carriage 50. In this case, the tool C may be transferred between the tool magazine 20 and the second tool magazine 20b by the tool carriage 50. In other words, the second tool carriage 28 may be omitted.

The present invention will not be limited to the above-described embodiments; i.e. the scope of the present invention is defined by the appended claims. It will also be appreciated that the various kinds of technology and/or technique used in one embodiment are applicable to the other embodiments unless a technical contradiction occurs. Further, it will be appreciated that the optional configurations in each embodiment may be omitted if deemed necessary.

For example, in the above-described embodiments, the tool magazine 20 is described as being a tool magazine capable of making a circulation motion of the tools C along a vertical surface. Alternatively, the tool magazine 20 may be a tool magazine capable of making a circulation motion of the tools C along a horizontal surface, or even may be a tool magazine having any other form.

In the above-described embodiments, it may be a robot, instead of a worker, that provides the tool C to the tool receiver 10. In other words, the tool receiver 10 may be used as an intermediate point of tool transportation on an automated line.

In the above-described embodiments, the tool support member 11 of the tool receiver 10 is described as being movable. Alternatively, the tool support member 11 of the tool receiver 10 may be unmovable. In this case, the tool carriage 50 is preferably capable of moving upward and downward the tool received from the tool receiver 10. For example, the tool carriage 50 may be capable of moving the carrier 52 between the third position P3 and the fourth position P4, and capable of moving the carrier 52 between the first position P1 and the second position P2.

### Reference Signs List

1, 1A, 1B, 1C ... Tool storage, 10 ... Tool receiver, 11 ... Tool support member, 12 ... Driver, 13 ... Guide member, 20 ... Tool magazine, 20b ... Second tool magazine, 21, 21b ... Tool holder, 23, 23b ... Endless chain, 24, 24b ... Driver, 25, 25b ... Sprocket, 28 ... Second tool carriage, 30 ... Machining apparatus, 32 ... Tool holding member, 40 ... Workpiece holder, 42 ... Chuck, 44 ... Support member, 50 ... Tool carriage, 52 ... Carrier, 54 ... Guide member, 56 ... Carrier driver, 60 ... Tool exchanger, 61 ... Exchanger body, 62a ... First gripper, 62b ... Second gripper, 63a ... First arm, 63b ... Second arm, 64 ... Swing motion driver, 68 ... Support member, 69 ... Linear motion driver, 70 ... Auxiliary magazine, 72 ... Tool transferor, 80 ... Housing, 81 ... Door, 82 ... Door, 85 ... Base, 90 ... Controller, 94 ... Input device, 100, 100A, 100B, 100C ... Machine tool, 101a ... Front surface, 101b ... Back surface, 110 ... Gripper, 110a ... First gripper, 110b ... Second gripper, 210 ... Gripper, 282 ... Second carrier, 284 ... Second carrier driver, 520 ... Carrier body, 521 ... Holder, 523 ... Arm, 525 ... First driver, 528 ... Second driver, 620 ... Lock member, AR 1 ... First region, AR 2 ... Second region, AS ... Access opening, AS 2 ... Second access opening, C ... Tool, C1 ... First tool, C 2 ... Second tool, Ca ... Tool body, Cb ... First portion, Cb1 ... Ring-shaped groove, Cd ... Second portion, Cd 1 ... Base end portion, Ce ... Base end surface, OB ... Trajectory, W ... Workpiece

## Claims

1. A tool storage (1, 1A, 1B, 1C) comprising:
a tool receiver (10) adapted to be provided at a position further in a first direction (DR1) than a workpiece holder (40) of a machine tool (100, 100A, 100B, 100C) and configured to receive a tool (C) from outside the machine tool (100, 100A, 100B, 100C);
a tool magazine (20) adapted to be provided at a position further in a second direction (DR2) than the workpiece holder (40), the second direction (DR2) being defined as a direction opposite to the first direction (DR1); and
a tool carriage (50) is configured to carry the tool (C) between the tool receiver (10) and the tool magazine (20),
**characterized in that**
a tool exchanger (60) is configured to exchange a first tool (C1) and a second tool (C2) with each other, the first tool (C1) being carriable to a tool exchange position (Pe) by the tool carriage (50), the second tool (C2) being attachable to a machining apparatus (30) of the machine tool (100, 100A, 100B, 100C).

2. The tool storage (1, 1A, 1B, 1C) according to claim 1, wherein the first direction (DR1) is a direction from a back surface (101b) of the machine tool (100, 100A, 100B, 100C) toward a front surface (101a) of the machine tool (100, 100A, 100B, 100C).

3. The tool storage (1, 1A, 1B, 1C) according to claim 1 or 2,
wherein the tool exchanger (60) comprises
a first arm (63a) comprising a first gripper (110a),
a second arm (63b) comprising a second gripper (110b),
a swing motion driver (64) configured to cause the first arm (63a) and the second arm (63b) to swing about a first axis (AX1), and
a linear motion driver (69) configured to move the first arm (63a) and the second arm (63b) linearly in a direction (DR4) along the first axis (AX1), and
wherein the first arm (63a) and the second arm (63b) are arranged in a V shape.

4. The tool storage (1, 1A, 1B, 1C) according to claim 3, wherein a different member (68) different from a member that is rotatable about the first axis (AX1) together with the first arm (63a) is provided at a position where the different member (68) interferes with an imaginary circle (HC) drawn by the first arm (63a) when the first arm (63a) makes an imaginary 360-degree rotation about the first axis (AX1).

5. The tool storage (1, 1A, 1B, 1C) according to any one of claims 1 to 4, further comprising a controller (90) configured to control the tool carriage (50) and the tool exchanger (60), the controller (90) being configured to selectively execute:
a first control mode in which the controller (90) is configured to control the tool carriage (50) to carry the tool (C) from the tool receiver (10) to the tool magazine (20); and
a second control mode in which the controller (90) is configured to control the tool carriage (50) to carry the tool (C) from the tool receiver (10) to the tool exchange position (Pe), and configured to control the tool exchanger (60) to attach, to the machining apparatus (30), the tool (C) provided at the tool exchange position (Pe).

6. The tool storage (1, 1A, 1B, 1C) according to any one of claims 1 to 5,
wherein the tool carriage (50) is configured to transfer the tool (C) to the tool receiver (10), the tool magazine (20), and the tool exchanger (60),
wherein the tool carriage (50) is configured to receive the tool (C) from the tool receiver (10), the tool magazine (20), and the tool exchanger (60),
wherein each of the tool receiver (10), the tool magazine (20), and the tool exchanger (60) is configured to grip a first portion (Cb) of the tool (C), and
wherein the tool carriage (50) is configured to hold a second portion (Cd) of the tool (C) different from the first portion (Cb) of the tool (C).

7. The tool storage (1, 1A, 1B, 1C) according to any one of claims 1 to 6, wherein the tool receiver (10) comprises
a tool support member (11) configured to support the tool (C), and
a driver (12) configured to move the tool support member (11) between a first position (P1) and a second position (P2).

8. The tool storage (1, 1A, 1B, 1C) according to any one of claims 1 to 6, wherein a carrying passage defined by the tool carriage (50) is provided above a first position (P1) defined as a position where the tool receiver (10) receives the tool (C) from outside the machine tool (100, 100A, 100B, 100C).

9. The tool storage (1C) according to any one of claims 1 to 8, further comprising:
a second tool magazine (20b) provided at a position further in the second direction (DR2) than the workpiece holder (40); and
a second tool carriage (28) configured to carry the tool (C) between the tool magazine (20) and the second tool magazine (20b).

10. The tool storage (1, 1A, 1B, 1C) according to any one of claims 1 to 9, further comprising a housing (80) having an access opening (AS) through which an inside of the machine tool (100, 100A, 100B, 100C) is accessible,
wherein the tool receiver (10) is provided in a region (AR1) where the tool receiver (10) is accessible from the access opening (AS).

11. The tool storage (1, 1A, 1B, 1C) according to claim 10, wherein the housing (80) has a second access opening (AS2) through which the tool magazine (20) is directly accessible.

12. The tool storage (1, 1A, 1B, 1C) according to any one of claims 1 to 11, further comprising:
an auxiliary magazine (70) in which the tool (C) is storable; and
a tool transferor (72) configured to transfer the tool (C) between the tool receiver (10) and the auxiliary magazine (70).

13. A machine tool (100, 100A, 100B, 100C) comprising:
a workpiece holder (40) configured to hold a workpiece;
a machining apparatus (30) to which a tool (C) is attachable;
the tool storage (1, 1A, 1B, 1C) according to claim 1; wherein
the tool receiver (10) is provided at a position closer to a front surface (101a) of the machine tool (100, 100A, 100B, 100C) than the workpiece holder (40) is to the front surface (101a);
the tool magazine (20) is provided at a position closer to a back surface (101b) of the machine tool (100, 100A, 100B, 100C) than the workpiece holder (40) is to the back surface (101b).

14. The tool storage (1, 1A, 1B, 1C) according to claim 1, further comprising:
a housing (80) having an access opening (AS) through which an inside of a machine tool (100, 100A, 100B, 100C) is accessible; wherein
the tool receiver (10) is provided in the housing (80) and in a first region (AR1) accessible through the access opening (AS);
the tool magazine (20) is provided in the housing (80) and in a second region (AR2) that is further away from the access opening (AS) than the first region (AR1) is away from the access opening (AS).

## Patentansprüche

1. Werkzeugspeicher (1, 1A, 1B, 1C), der Folgendes aufweist:
eine Werkzeugaufnahme (10), die angepasst ist, um an einer Position vorgesehen zu werden, die in einer ersten Richtung (DR1) weiter entfernt ist als ein Werkstückhalter (40) einer Werkzeugmaschine (100, 100A, 100B, 100C), und gestaltet ist, um ein Werkzeug (C) von außerhalb der Werkzeugmaschine (100, 100A, 100B, 100C) aufzunehmen;
ein Werkzeugmagazin (20), das angepasst ist, um an einer Position vorgesehen zu werden, die in einer zweiten Richtung (DR2) weiter entfernt ist als der Werkstückhalter (40), wobei die zweite Richtung (DR2) als eine Richtung definiert ist, die zu der ersten Richtung (DR1) entgegengesetzt ist; und
einen Werkzeugschlitten (50), der gestaltet ist, um das Werkzeug (C) zwischen der Werkzeugaufnahme (10) und dem Werkzeugmagazin (20) zu transportieren,
**dadurch gekennzeichnet, dass**
ein Werkzeugwechsler (60) gestaltet ist, um ein erstes Werkzeug (C1) und ein zweites Werkzeug (C2) miteinander zu wechseln, wobei das erste Werkzeug (C1) durch den Werkzeugschlitten (50) zu einer Werkzeugwechselposition (Pe) transportiert werden kann, und das zweite Werkzeug (C2) an einem Bearbeitungsgerät (30) der Werkzeugmaschine (100, 100A, 100B, 100C) angebracht werden kann.

2. Werkzeugspeicher (1, 1A, 1B, 1C) nach Anspruch 1, wobei die erste Richtung (DR1) eine Richtung von einer hinteren Fläche (101b) der Werkzeugmaschine (100, 100A, 100B, 100C) zu einer vorderen Fläche (101a) der Werkzeugmaschine (100, 100A, 100B, 100C) hin ist.

3. Werkzeugspeicher (1, 1A, 1B, 1C) nach Anspruch 1 oder 2,
wobei der Werkzeugwechsler (60) Folgendes aufweist:
einen ersten Arm (63a), der einen ersten Greifer (110a) aufweist,
einen zweiten Arm (63b), der einen zweiten Greifer (110b) aufweist,
einen Schwenkbewegungsantrieb (64), der gestaltet ist, um den ersten Arm (63a) und den zweiten Arm (63b) um eine erste Achse (AX1) schwenken lassen zu können, und
einen Linearbewegungsantrieb (69), der gestaltet ist, um den ersten Arm (63a) und den zweiten Arm (63b) linear in einer Richtung (DR4) entlang der ersten Achse (AX1) zu bewegen, und
wobei der erste Arm (63a) und der zweite Arm (63b) in einer V-Form angeordnet sind.

4. Werkzeugspeicher (1, 1A, 1B, 1C) nach Anspruch 3, wobei ein anderes Bauteil (68), das sich von einem Bauteil unterscheidet, das zusammen mit dem ersten Arm (63a) um die erste Achse (AX1) drehbar ist, an einer Position vorgesehen ist, an der das andere Bauteil (68) mit einem imaginären Kreis (HC) überlagert wird, der von dem ersten Arm (63a) gezeichnet wird, wenn der erste Arm (63a) eine imaginäre 360-Grad-Drehung um die erste Achse (AX1) ausführt.

5. Werkzeugspeicher (1, 1A, 1B, 1C) nach einem der Ansprüche 1 bis 4, der des Weiteren ein Steuerungsgerät (90) aufweist, das gestaltet ist, um den Werkzeugschlitten (50) und den Werkzeugwechsler (60) zu steuern, wobei das Steuerungsgerät (90) gestaltet ist, um wahlweise Folgendes auszuführen:
einen ersten Steuerungsmodus, in dem das Steuerungsgerät (90) gestaltet ist, um den Werkzeugschlitten (50) zu steuern, um das Werkzeug (C) von der Werkzeugaufnahme (10) zu dem Werkzeugmagazin (20) zu transportieren; und
einen zweiten Steuerungsmodus, in dem das Steuerungsgerät (90) gestaltet ist, um den Werkzeugschlitten (50) zu steuern, um das Werkzeug (C) von der Werkzeugaufnahme (10) zu der Werkzeugwechselposition (Pe) zu transportieren, und gestaltet ist, um den Werkzeugwechsler (60) zu steuern, um das an der Werkzeugwechselposition (Pe) vorgesehene Werkzeug (C) an dem Bearbeitungsgerät (30) anzubringen.

6. Werkzeugspeicher (1, 1A, 1B, 1C) nach einem der Ansprüche 1 bis 5,
wobei der Werkzeugschlitten (50) gestaltet ist, um das Werkzeug (C) an die Werkzeugaufnahme (10), das Werkzeugmagazin (20) und den Werkzeugwechsler (60) zu übergeben,
wobei der Werkzeugschlitten (50) gestaltet ist, um das Werkzeug (C) von der Werkzeugaufnahme (10), dem Werkzeugmagazin (20) und dem Werkzeugwechsler (60) aufzunehmen,
wobei die Werkzeugaufnahme (10), das Werkzeugmagazin (20) und der Werkzeugwechsler (60) jeweils gestaltet sind, um einen ersten Abschnitt (Cb) des Werkzeugs (C) zu greifen, und
wobei der Werkzeugschlitten (50) gestaltet ist, um einen zweiten Abschnitt (Cd) des Werkzeugs (C) zu halten, der sich von dem ersten Abschnitt (Cb) des Werkzeugs (C) unterscheidet.

7. Werkzeugspeicher (1, 1A, 1B, 1C) nach einem der Ansprüche 1 bis 6, wobei die Werkzeugaufnahme (10) Folgendes aufweist
ein Werkzeugstützbauteil (11), das gestaltet ist, um das Werkzeug (C) zu stützen, und
einen Antrieb (12), der gestaltet ist, um das Werkzeugstützbauteil (11) zwischen einer ersten Position (P1) und einer zweiten Position (P2) zu bewegen.

8. Werkzeugspeicher (1, 1A, 1B, 1C) nach einem der Ansprüche 1 bis 6, wobei ein durch den Werkzeugschlitten (50) definierter Transportdurchgang oberhalb einer ersten Position (P1) vorgesehen ist, die als eine Position definiert ist, in der die Werkzeugaufnahme (10) das Werkzeug (C) von außerhalb der Werkzeugmaschine (100, 100A, 100B, 100C) aufnimmt.

9. Werkzeugspeicher (1C) nach einem der Ansprüche 1 bis 8, der des Weiteren Folgendes aufweist:
ein zweites Werkzeugmagazin (20b), das an einer Position vorgesehen ist, die in der zweiten Richtung (DR2) weiter entfernt ist als der Werkstückhalter (40); und
einen zweiten Werkzeugschlitten (28), der gestaltet ist, um das Werkzeug (C) zwischen dem Werkzeugmagazin (20) und dem zweiten Werkzeugmagazin (20b) zu transportieren.

10. Werkzeugspeicher (1, 1A, 1B, 1C) nach einem der Ansprüche 1 bis 9, der des Weiteren ein Gehäuse (80) aufweist, das eine Zugangsöffnung (AS) hat, durch die ein Innenraum der Werkzeugmaschine (100, 100A, 100B, 100C) zugänglich ist,
wobei die Werkzeugaufnahme (10) in einem Bereich (AR1) vorgesehen ist, in dem die Werkzeugaufnahme (10) von der Zugangsöffnung (AS) aus zugänglich ist.

11. Werkzeugspeicher (1, 1A, 1B, 1C) nach Anspruch 10, wobei das Gehäuse (80) eine zweite Zugangsöffnung (AS2) hat, durch die das Werkzeugmagazin (20) direkt zugänglich ist.

12. Werkzeugspeicher (1, 1A, 1B, 1C) nach einem der Ansprüche 1 bis 11, der des Weiteren Folgendes aufweist:
ein Zusatzmagazin (70), in dem das Werkzeug (C) lagerfähig ist; und
eine Werkzeugübergabevorrichtung (72), die gestaltet ist, um das Werkzeug (C) zwischen der Werkzeugaufnahme (10) und dem Zusatzmagazin (70) zu übergeben.

13. Werkzeugmaschine (100, 100A, 100B, 100C), die Folgendes aufweist:
einen Werkstückhalter (40), der gestaltet ist, um ein Werkstück zu halten;
ein Bearbeitungsgerät (30), an dem ein Werkzeug (C) angebracht werden kann;
den Werkzeugspeicher (1, 1A, 1B, 1C) nach Anspruch 1, wobei
die Werkzeugaufnahme (10) an einer Position vorgesehen ist, die näher an einer vorderen Fläche (101a) der Werkzeugmaschine (100, 100A, 100B, 100C) liegt als der Werkstückhalter (40) an der vorderen Fläche (101a);
das Werkzeugmagazin (20) an einer Position vorgesehen ist, die näher an einer hinteren Fläche (101b) der Werkzeugmaschine (100, 100A, 100B, 100C) liegt als der Werkstückhalter (40) an der hinteren Fläche (101b).

14. Werkzeugspeicher (1, 1A, 1B, 1C) nach Anspruch 1, der des Weiteren Folgendes aufweist:
ein Gehäuse (80), das eine Zugangsöffnung (AS) hat, durch die ein Innenraum einer Werkzeugmaschine (100, 100A, 100B, 100C) zugänglich ist; wobei
die Werkzeugaufnahme (10) in dem Gehäuse (80) und in einem ersten Bereich (AR1) vorgesehen ist, der durch die Zugangsöffnung (AS) zugänglich ist;
das Werkzeugmagazin (20) in dem Gehäuse (80) und in einem zweiten Bereich (AR2) vorgesehen ist, der weiter von der Zugangsöffnung (AS) entfernt ist als der erste Bereich (AR1) von der Zugangsöffnung (AS) entfernt ist.

## Revendications

1. Stockage d'outil (1, 1A, 1B, 1C) comprenant :
un récepteur d'outil (10) conçu pour être placé à une position plus éloignée dans une première direction (DR1) qu'un porte-pièce (40) d'une machine-outil (100, 100A, 100B, 100C) et configuré pour recevoir un outil (C) provenant de l'extérieur de la machine-outil (100, 100A, 100B, 100C) ;
un magasin d'outils (20) conçu pour être placé à une position plus éloignée dans une seconde direction (DR2) que le porte-pièce (40), la seconde direction (DR2) étant définie comme une direction opposée à la première direction (DR1) ; et
un chariot porte-outil (50) configuré pour transporter l'outil (C) entre le récepteur d'outil (10) et le magasin d'outils (20), **caractérisé en ce qu'**un échangeur d'outils (60) est configuré pour échanger un premier outil (CI) et un second outil (C2) l'un avec l'autre, le premier outil (CI) pouvant être porté à une position d'échange d'outils (Pe) par le chariot porte-outil (50), le second outil (C2) pouvant être fixé à un appareil d'usinage (30) de la machine-outil (100, 100A, 100B, 100C).

2. Stockage d'outil (1, 1A, 1B, 1C) selon la revendication 1, dans lequel la première direction (DR1) est une direction allant d'une surface arrière (101b) de la machine-outil (100, 100A, 100B, 100C) vers une surface avant (101a) de la machine-outil (100, 100A, 100B, 100C).

3. Stockage d'outil (1, 1A, 1B, 1C) selon la revendication 1 ou 2,
dans lequel l'échangeur d'outils (60) comprend
un premier bras (63a) comprenant une première pince (110a),
un second bras (63b) comprenant une seconde pince (110b),
un moteur à mouvement oscillant (64) configuré pour faire osciller le premier bras (63a) et le second bras (63b) autour d'un premier axe (AX1), et
un moteur à mouvement linéaire (69) configuré pour déplacer linéairement le premier bras (63a) et le second bras (63b) dans une direction (DR4) le long du premier axe (AX1), et
dans lequel le premier bras (63a) et le second bras (63b) sont disposés en forme de V.

4. Stockage d'outil (1, 1A, 1B, 1C) selon la revendication 3, dans lequel un élément différent (68) qui est différent d'un élément rotatif autour du premier axe (AX1) avec le premier bras (63a) est fourni à une position où l'élément différent (68) interfère avec un cercle imaginaire (HC) dessiné par le premier bras (63a) lorsque le premier bras (63a) effectue une rotation imaginaire de 360 degrés autour du premier axe (AX1).

5. Stockage d'outil (1, 1A, 1B, 1C) selon l'une quelconque des revendications 1 à 4, comprenant en outre un dispositif de commande (90) configuré pour commander le chariot porte-outil (50) et l'échangeur d'outils (60), le dispositif de commande (90) étant configuré pour exécuter sélectivement :
un premier mode de commande dans lequel le dispositif de commande (90) est configuré pour commander le chariot porte-outil (50) afin de transporter l'outil (C) du récepteur d'outil (10) au magasin d'outils (20) ; et
un second mode de commande dans lequel le dispositif de commande (90) est configuré pour commander le chariot porte-outil (50) afin de transporter l'outil (C) du récepteur d'outil (10) à la position d'échange d'outils (Pe), et configuré pour commander l'échangeur d'outils (60) afin de fixer, sur l'appareil d'usinage (30), l'outil (C) fourni à la position d'échange d'outils (Pe).

6. Stockage d'outil (1, 1A, 1B, 1C) selon l'une quelconque des revendications 1 à 5,
dans lequel le chariot porte-outil (50) est configuré pour transférer l'outil (C) au récepteur d'outil (10), au magasin d'outils (20) et à l'échangeur d'outils (60), dans lequel le chariot porte-outil (50) est configuré pour recevoir l'outil (C) du récepteur d'outil (10), du magasin d'outils (20) et de l'échangeur d'outils (60), dans lequel chacun du récepteur d'outil (10), du magasin d'outils (20) et de l'échangeur d'outils (60) est configuré pour saisir une première partie (Cb) de l'outil (C), et
le chariot porte-outil (50) est configuré pour maintenir une seconde partie (Cd) de l'outil (C) différente de la première partie (Cb) de l'outil (C).

7. Stockage d'outil (1, 1A, 1B, 1C) selon l'une quelconque des revendications 1 à 6, dans lequel le récepteur d'outil (10) comprend
un élément porte-outil (11) configuré pour supporter l'outil (C), et
un élément d'entraînement (12) configuré pour déplacer l'élément porte-outil (11) entre une première position (P1) et une seconde position (P2).

8. Stockage d'outil (1, 1A, 1B, 1C) selon l'une quelconque des revendications 1 à 6, dans lequel un passage de transport défini par le chariot porte-outil (50) est prévu au-dessus d'une première position (P1) définie comme une position dans laquelle le récepteur d'outil (10) reçoit l'outil (C) de l'extérieur de la machine-outil (100, 100A, 100B, 100C).

9. Stockage d'outil (1C) selon l'une quelconque des revendications 1 à 8, comprenant en outre :
un second magasin d'outils (20b) situé plus loin dans la seconde direction (DR2) que le porte-pièce (40) ; et
un second chariot porte-outil (28) configuré pour transporter l'outil (C) entre le magasin d'outils (20) et le second magasin d'outils (20b).

10. Stockage d'outil (1, 1A, 1B, 1C) selon l'une quelconque des revendications 1 à 9, comprenant en outre un boîtier (80) doté d'une ouverture d'accès (AS) permettant d'accéder à l'intérieur de la machine-outil (100, 100A, 100B, 100C),
dans lequel le récepteur d'outil (10) est fourni dans une région (AR1) où le récepteur d'outil (10) est accessible depuis l'ouverture d'accès (AS).

11. Stockage d'outil (1, 1A, 1B, 1C) selon la revendication 10, dans lequel le boîtier (80) présente une seconde ouverture d'accès (AS2) permettant d'accéder directement au magasin d'outils (20).

12. Stockage d'outil (1, 1A, 1B, 1C) selon l'une quelconque des revendications 1 à 11, comprenant en outre :
un magasin auxiliaire (70) dans lequel l'outil (C) peut être stocké ; et
un dispositif de transfert d'outil (72) configuré pour transférer l'outil (C) entre le récepteur d'outil (10) et le magasin auxiliaire (70).

13. Machine-outil (100, 100A, 100B, 100C) comprenant :
un porte-pièce (40) configuré pour tenir une pièce à usiner ;
un appareil d'usinage (30) auquel un outil (C) peut être fixé ;
un stockage d'outil (1, 1A, 1B, 1C) selon la revendication 1 ; dans lequel
le récepteur d'outil (10) est placé plus près de la surface avant (101a) de la machine-outil (100, 100A, 100B, 100C) que le porte-pièce (40) ne l'est de la surface avant (101a) ;
le magasin d'outils (20) est placé plus près de la surface arrière (101b) de la machine-outil (100, 100A, 100B, 100C) que le porte-pièce (40) ne l'est de la surface arrière (101b).

14. Stockage d'outil (1, 1A, 1B, 1C) selon la revendication 1, comprenant en outre :
un boîtier (80) comportant une ouverture d'accès (AS) permettant d'accéder à l'intérieur d'une machine-outil (100, 100A, 100B, 100C) ; dans lequel
le récepteur d'outil (10) est prévu dans le boîtier (80) et dans une première région (AR1) accessible par l'ouverture d'accès (AS) ;
le magasin d'outils (20) est prévu dans le boîtier (80) et dans une seconde région (AR2) qui est plus éloignée de l'ouverture d'accès (AS) que la première région (AR1) ne l'est de l'ouverture d'accès (AS).
